# EUROPEAN PATENT APPLICATION

(11) **EP 4 741 154 A1**
(43) Date of publication of application: **13.05.2026**
(21) Application number: 24836082.8
(22) Date of filing: 03.07.2024
(51) Int. Cl.: B32B 15/08, B32B 7/022, B32B 7/023, B32B 15/18, B32B 27/20

(54) **PRECOATED STEEL SHEET**

(30) Priority: 03.07.2023 JP 2023109651
(71) Applicant: Nippon Steel Corporation, Tokyo 100-8071 (JP)
(72) Inventor: FUJII, Takashi, Tokyo 100-8071 (JP); KAWAMURA, Yasuaki, Tokyo 100-8071 (JP); SHIBAO, Fumio, Tokyo 100-8071 (JP)
(74) Representative: Vossius & Partner Patentanwälte Rechtsanwälte mbB
(86) International application number: PCT/JP2024/024132
(87) International publication number: WO 2025/009570

(57) **Abstract**

[PROBLEM] To further improve design properties and productivity of a pre-painted steel sheet by preventing resin particles from dropping out of a painting layer and deformation.

[SOLUTION] The pre-painted steel sheet according to the present invention includes: a zinc-based plated steel sheet; and a painting layer located on a surface of a zinc-based plating layer, wherein the painting layer contains resin particles, and a binder resin and a color pigment as film-forming components, and in a cross-section cut at any position of the painting layer in a thickness direction, an average value of area ratios occupied by the resin particles is within a range of 5 to 40%, an average thickness dA at each portion of the painting layer not containing the resin particle is within a range of 10 to 40 µm, an average particle size ø of the resin particles is 4.0 times or less than the average thickness dA, an average substantial thickness dB of the painting layer at each portion containing the resin particle is within a range of 4 to 30 µm, and an average value of number ratios of exposed resin particles is 5 to 50%.

## Description

### TECHNICAL FIELD

The present invention relates to a pre-painted steel sheet.

### BACKGROUND ART

Metal sheets with high design properties are increasingly used for home appliances, building materials, automobiles, and other applications. Examples of such metal sheets with high design properties include, for example, metal sheets with colored organic coatings, metal sheets with highly glossy surfaces, and other metal sheets. Among the metal sheets with such design properties, when a zinc-based plated steel sheet provided with various types of zinc-based plating layers is used as a raw material of the metal sheets, it is possible to achieve steel sheets with both excellent corrosion resistance and excellent design properties resulting from zinc-based plated steel sheets.

In the metal sheets and steel sheets with high design properties as described above, a scratch resistance of an outermost surface of the metal sheets and steel sheets with the design properties is important to maintain the excellent design properties. For this reason, many proposals have been conventionally made regarding the scratch resistance of the metal sheets and steel sheets with high design properties.

For example, Patent Document 1 listed below has proposed a technology to improve an abrasion resistance of an organic film on a zinc-based plated steel sheet having the organic film by making the organic film contain beads having a particle size larger than a thickness of the organic film (hereinafter also referred to as "large-size beads").

### PRIOR ART DOCUMENT

### PATENT DOCUMENT

Patent Document 1: International Publication Pamphlet No. WO 2014/112544

### SUMMARY OF THE INVENTION

### PROBLEMS TO BE SOLVED BY THE INVENTION

However, when the zinc-based plated steel sheet having the organic film containing large-size beads as proposed in Patent Document 1 listed above is coiled or subjected to a predetermined press-working process, the large-size beads may drop out of the organic film, and the design properties of the organic film may be degraded. In addition, there is concern that the large-size beads that drop out of the organic film may contaminate various coiling and press-working facilities, thereby interfering with the processes. For these reasons, it is necessary to take sufficient care when handling the organic film containing large-size beads, and there is room for further improvement from a viewpoint of improving productivity.

In addition, when coiled or press-worked, the large-size beads may be deformed by a coiling tension of the coil, a pressure during the press-working process, or the like even if the large-size beads do not drop out. When such deformation occurs, the organic film at the deformed portion becomes relatively flat, resulting in a partial change in gloss, which may degrade the desired design properties. This degradation of design properties due to gloss level change is also referred to as pressure marks. Thus, there is room for further improvement in organic films containing large-size beads in terms of maintaining the design properties.

The present invention has been made in view of the above problems, and an object thereof is to provide a pre-painted steel sheet that can further improve design properties and productivity while having a painting layer containing resin particles with a particle size larger than a thickness.

### MEANS FOR SOLVING THE PROBLEMS

As a result of earnest studies for solving the above-described problems, the present inventors obtained ideas that if surfaces of resin particles contained in the painting layer, each having a particle size larger than an average thickness, can be covered to some extent with a binder resin, the resin particles may be prevented from dropping out or being deformed. Based on this idea, the inventors examined in detail conditions for resin particles having the particle size larger than the average thickness. As a result, the inventors found that it is possible to prevent the resin particles from dropping out of the painting layer and deformation, thereby further improving the design properties and productivity of the pre-painted steel sheet when the average particle size of the resin particles, the average thickness of the painting layer, and a thickness of the binder resin covering the surface of the resin particle satisfy certain conditions,.

The gist of the invention completed based on such findings is as follows.
(1) A pre-painted steel sheet including: a zinc-based plated steel sheet having a zinc-based plating layer, which is a plating layer containing at least zinc, located on a surface of a base steel sheet; and a painting layer located on a surface of the zinc-based plating layer, wherein the painting layer contains resin particles, and a binder resin and a color pigment as film-forming components, in a cross-section cut at any position of the painting layer in a thickness direction, an average value of area ratios, each of which is an area percentage occupied by the resin particles, is within a range of 5 to 40%, an average thickness dA of the painting layer at each portion not containing the resin particle is within a range of 10 to 40 µm, an average particle size ø of the resin particles is 4.0 times or less than the average thickness dA, at a portion of the painting layer containing the resin particle, when a thickness obtained by subtracting a thickness of a portion corresponding to the resin particle from an overall thickness of the painting layer including the resin particle is referred to as a substantial thickness of the painting layer at a portion containing the resin particle, an average substantial thickness dB, which is an average value of the substantial thicknesses at the portions each containing the resin particle, is within a range of 4 to 30 µm, and when the resin particle having a portion whose outer periphery is not covered with the film-forming components with a thickness of 1 µm or more is referred to as an exposed resin particle, an average value of number ratios of the exposed resin particles is 5 to 50%.
(2) The pre-painted steel sheet according to (1), wherein in the cross-section, 80% or more of a length of the exposed resin particle along the outer periphery is covered with the film-forming components.
(3) The pre-painted steel sheet according to (1) or (2), wherein when a 60-degree specular gloss G_{S} (60°) specified in JIS Z 8741:1997 is measured on a surface of the painting layer before and after tensile elongation of 30% is applied to the pre-painted steel sheet, a rate of change of the 60-degree specular gloss G_{S} (60°) before and after applying the tensile elongation is 60% or less.
(4) The pre-painted steel sheet according to (1) or (2), wherein a compressive elastic modulus of the binder resin at 25°C is within a range of 60 to 150 MPa, a compressive elastic modulus of the resin particle at 25°C is within a range of 60 to 250 MPa, and the compressive elastic modulus of the binder resin at 25°C is equal to or less than the compressive elastic modulus of the resin particle at 25°C.
(5) The pre-painted steel sheet according to (1) or (2), wherein when a particle size distribution is measured, the painting layer contains small-size resin particles with an average particle size within a range of 9 to 26 µm, having a peak within a range of 17 ± 8 µm in particle size and large-size resin particles with an average particle size within a range of 40 to 70 µm, having a peak within a range of 55 ± 10 µm in particle size, as the resin particles.
(6) The pre-painted steel sheet according to (5), wherein a content percentage CL of the small-size resin particles is within a range of 5 to 30 mass% relative to a total solid content mass of the painting layer, and a content percentage CH of the large-size resin particles is within a range of 5 to 30 mass% relative to the total solid content mass of the painting layer.
(7) The pre-painted steel sheet according to (5), wherein a ratio (CL/CH) of the content percentage CL of the small-size resin particles to the content percentage CH of the large-size resin particles is within a range of 0.5 to 1.5.
(8) The pre-painted steel sheet according to (5), wherein a ratio (øL/øH) of an average particle size øL of the small-size resin particles to an average particle size øH of the large-size resin particles is within a range of 0.14 to 0.58.
(9) The pre-painted steel sheet according to (5), wherein a compressive elastic modulus of the small-size resin particle at 25°C is within a range of 60 to 250 MPa, and a compressive elastic modulus of the large-size resin particle at 25°C is within a range of 60 to 250 MPa.

### EFFECT OF THE INVENTION

As explained above, the present invention makes it possible to further improve design properties and productivity of pre-painted steel sheets by preventing resin particles from dropping out of a painting layer and deformation.

### BRIEF DESCRIPTION OF THE DRAWINGS

FIG. 1A is a schematic diagram for explaining an example of a structure of a pre-painted steel sheet according to an embodiment of the present invention.
FIG. 1B is a schematic diagram for explaining an example of the structure of the pre-painted steel sheet according to the embodiment.
FIG. 1C is a schematic diagram for explaining an example of the structure of the pre-painted steel sheet according to the embodiment.
FIG. 1D is a schematic diagram for explaining an example of the structure of the pre-painted steel sheet according to the embodiment.
FIG. 2 is a schematic diagram for explaining a painting layer in the pre-painted steel sheet according to the embodiment.

### EMBODIMENTS FOR CARRYING OUT INVENTION

Hereinafter, preferred embodiments of the present invention will be described with reference to the drawings. Note that in the present description and the drawings, components having substantially the same functional configurations are denoted by the same codes to omit overlapping explanations.

### (Pre-painted steel sheet)

### <Structure of pre-painted steel sheet>

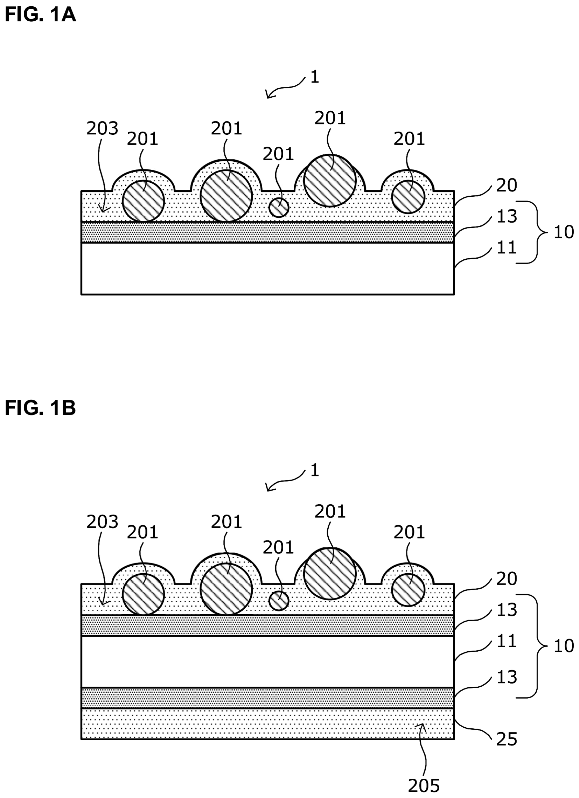

In the following, a structure of a pre-painted steel sheet of this embodiment will be described with reference to FIG. 1A to FIG. 1D. FIG. 1A to FIG. 1D are schematic diagrams for explaining an example of the structure of the pre-painted steel sheet of this embodiment. In this embodiment, the pre-painted steel sheet means a plated steel sheet with a painting layer on its surface.

As schematically illustrated in FIG. 1A, a pre-painted steel sheet 1 of this embodiment has a zinc-based plated steel sheet 10 and a painting layer 20 located on one surface of the zinc-based plated steel sheet 10. Here, the zinc-based plated steel sheet 10 has a base steel sheet 11 as a base material and a zinc-based plating layer 13 located on a surface of the base steel sheet 11. The painting layer 20 of this embodiment contains resin particles 201 in a dispersed state.

As schematically illustrated in FIG. 1B, in the pre-painted steel sheet 1 of this embodiment, the painting layer 20 containing the resin particles 201 is provided on one surface of the base material, zinc-based plated steel sheet 10, and a painting layer 25 not containing the resin particles 201 may be provided on the other surface of the zinc-based plated steel sheet 10.

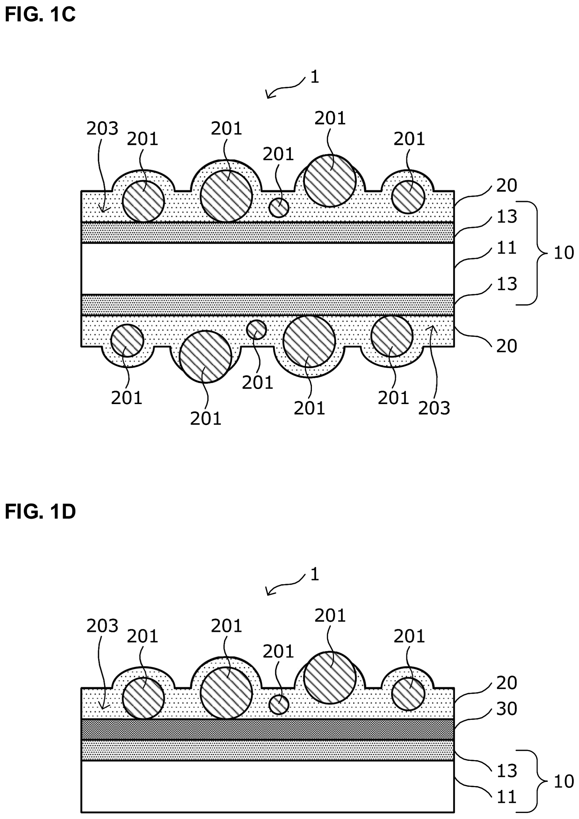

As schematically illustrated in FIG. 1C, the pre-painted steel sheet 1 of this embodiment may have the painting layer 20 containing the resin particles 201 on both surfaces of the base material, zinc-based plated steel sheet 10.

As schematically illustrated in FIG. 1D, the pre-painted steel sheet 1 of this embodiment may further have an anti-corrosion coating layer 30 as an example of a coating layer containing an anticorrosive pigment and a resin between the zinc-based plated steel sheet 10 and the painting layer 20, as necessary.

Although FIG. 1D illustrates a case in which the anti-corrosion coating layer 30 is provided on the pre-painted steel sheet 1 having the structure illustrated in FIG. 1A, the pre-painted steel sheets 1 having the structures illustrated in FIG. 1B and FIG. 1C may be further provided with the anti-corrosion coating layer 30 at least between the zinc-based plated steel sheet 10 and the painting layer 20, or between the zinc-based plated steel sheet 10 and the painting layer 25.

In the following, each configuration of the pre-painted steel sheet 1 as illustrated in FIG. 1A to FIG. 1D will be described in detail.

### [Zinc-based plated steel sheet 10]

As described above, the zinc-based plated steel sheet 10 used as the base material of the pre-painted steel sheet 1 of this embodiment has the base steel sheet 11 and the zinc-based plating layer 13 located on the surface of the base steel sheet 11.

Examples of the base steel sheet 11 include, for example, various steel sheets such as Al-killed steel, ultralow carbon steel containing Ti, Nb, and the like, and high-strength steel containing additional strengthening elements such as P, Si, Mn, and other elements in the ultralow carbon steel.

Examples of the zinc-based plating layer 13 include, for example, zinc-based plating such as zinc plating, zinc-nickel plating, zinc-iron plating, zinc-chrome plating, zinc-aluminum plating, zinc-titanium plating, zinc-magnesium plating, zinc-manganese plating, zinc-aluminum-magnesium plating, and zinc-aluminum-magnesium-silicon plating. In addition, the zinc-based plating includes the plating, which contains small amounts of different metal elements or impurities such as cobalt, molybdenum, tungsten, nickel, titanium, chromium, aluminum, manganese, iron, magnesium, lead, bismuth, antimony, tin, copper, cadmium, arsenic, and the like, and plating, in which inorganic materials such as silica, alumina, titania are dispersed. Multi-layered plating combining the above plating with other types of plating (for example, iron plating, iron-phosphorus plating, nickel plating, cobalt plating, and the like) may also be used as the zinc-based plating. A plating method is not limited, and various known plating methods such as electroplating, hot-dip plating, vapor deposition plating, dispersion plating, vacuum plating, and other methods may be used.

Among such zinc-based plating, it is preferable to use the zinc-aluminum-magnesium alloy plating as the zinc-based plating layer 13 in particular, and it is more preferable to use the zinc-aluminum-magnesium-silicon alloy-plating layer, which contains Al: 4 to 22 mass%, Mg: 1 to 10 mass%, Si: 0.0001 to 2.0000 mass%, and the balance of Zn and impurities.

### [Al: 4 to 22 mass%]

A content of Al is set to 4 mass% or more, thereby making it possible to further improve the corrosion resistance of the steel sheet. The content of Al is more preferably 5 mass% or more. On the other hand, the content of Al is set to 22 mass% or less, thereby making it possible to further improve the corrosion resistance of the steel sheet while inhibiting saturation of such a corrosion resistance improving effect as above. The content of Al is more preferably 16 mass% or less.

### [Mg: 1 to 10 mass%]

A content of Mg is set to 1 mass% or more, thereby making it possible to further improve the corrosion resistance of the steel sheet. The content of Mg is more preferably 2 mass% or more. On the other hand, in a plating bath used for forming the plating layer, a concentration of Mg is adjusted so that the content of Mg in the zinc-based plating layer 13 after manufacture is 10 mass% or less, thereby making it possible to stabilize the generation of dross in the plating bath and stably manufacture a plated steel sheet. In the plating bath used for forming the zinc-based plating layer 13, it is more preferable to adjust the concentration of Mg so that the content of Mg in the zinc-based plating layer 13 after manufacture is 5 mass% or less.

### [Si: 0.0001 to 2.0000 mass%]

A content of Si is set to 0.0001 mass% or more, thereby making it possible to further improve adhesion of the zinc-based plating layer 13 (more specifically, the adhesion between the base steel sheet 11 and the zinc-based plating layer 13). On the other hand, the content of Si is set to 2.0000 mass% or less, thereby making it possible to further improve the adhesion of the zinc-based plating layer 13 while inhibiting saturation of the adhesion improving effect of the zinc-based plating layer 13. The content of Si is more preferably 1.6000 mass% or less.

Further, the zinc-based plating layer 13 of this embodiment may contain 1 mass% or less of elements such as Fe, Sb, and Pb, either alone or in combination, in place of part of Zn of the balance.

Examples of the zinc-based plated steel sheet 10 provided with the zinc-based plating layer 13 having the chemical components as stated above include, for example, a hot-dip zinc-aluminum-magnesium alloy-plated steel sheet having a Zn-6%Al-3%Mg alloy-plating layer and a hot-dip zinc-aluminum-magnesium-silicon alloy-plated steel sheet (for example, "SUPERDYMA (registered trademark)" manufactured by NIPPON STEEL CORPORATION), such as a plated steel sheet having a Zn-11%Al-3%Mg-0.2%Si alloy-plating layer, and other steel sheets.

Further, plating weight of the zinc-based plating layer 13 as above is preferably 30 g/m² or more in total on both surfaces of the steel sheet (namely, 15 g/m² or more per side). The coating weight is set to 30 g/m² or more, thereby making it possible to reliably ensure the corrosion resistance of the zinc-based plated steel sheet 10. The plating weight is more preferably 40 g/m² or more in total on both surfaces of the steel sheet. On the other hand, the plating weight is preferably 600 g/m² or less in total on both surfaces of the steel sheet (namely, 300 g/m² or less per side). The coating weight is set to 600 g/m² or less, thereby making it possible to achieve further improvement in the corrosion resistance while ensuring surface smoothness of the zinc-based plating layer 13. The plating weight is more preferably 550 g/m² or less in total on both surfaces of the steel sheet.

A thickness of the zinc-based plated steel sheet 10 as described above is not limited, and should be set appropriately according to mechanical strength (for example, tensile strength or the like), workability, and the like required for the pre-painted steel sheet 1 of this embodiment.

### [Painting layer 20]

The painting layer 20 held by the pre-painted steel sheet 1 of this embodiment will now be described. The painting layer 20 of this embodiment is provided on at least one side of the zinc-based plated steel sheet 10. The painting layer 20 of this embodiment is a coating layer in which the resin particles 201 are present in a dispersed state in the binder resin and the color pigment as the film-forming components 203, as illustrated in FIG. 1A to FIG. 1D. In addition to the above resin particles 201 and film-forming components 203, the painting layer 20 of this embodiment may further contain various additives such as cross-linking agents.

In the pre-painted steel sheet 1 of this embodiment, the resin particles 201 are dispersed in the film-forming components 203 in the painting layer 20, and in addition, such resin particles 201 satisfy the conditions as detailed below. As a result, in the pre-painted steel sheet 1 of this embodiment, the binder resin as the film-forming components 203 achieves the predetermined corrosion resistance and scratch resistance. Furthermore, in the pre-painted steel sheet 1 of this embodiment, it is possible to prevent occurrence of pressure marks caused by the relative flattening of the painting layer at the deformed portion, while achieving excellent design properties with both grainy and matte-tone appearances for the pre-painted steel sheet 1 as a whole.

### «Resin particles 201»

In the painting layer 20 of this embodiment, the resin particles 201 preferably have predetermined toughness and ductility. The resin particles 201 have the predetermined toughness and ductility, which makes it possible to mitigate impacts applied to the painting layer 20. As a result, the pre-painted steel sheet 1 of this embodiment can further improve the scratch resistance of the painting layer 20. In addition, the resin particles 201 have the predetermined toughness and ductility, thereby making it possible to further prevent the occurrence of the pressure marks caused by the relative flattening of the binder resin at the deformed portion. Furthermore, even if the painting layer 20 is scratched, the scratch can be prevented from reaching the zinc-based plated steel sheet 10, thus maintaining the corrosion resistance of the pre-painted steel sheet 1.

Here, in the painting layer 20 of this embodiment, particles made of various materials can be used as long as the resin particles 201 have the predetermined toughness and ductility. However, organic resin particles composed of organic resin are more preferably used from a viewpoint of having excellent toughness and ductility.

Examples of the organic resin particles used as the particles 201 include, for example, acrylic-based resin particles, polyester-based resin particles, urethane-based resin particles, fluorine-based resin particles, silicone resin particles, polyolefin-based resin particles, and other organic resin particles. Among these resins, the urethane-based resin particles or acrylic-based resin particles are more preferably used as the resin particles 201 from a viewpoint that the desired toughness and ductility can be more easily achieved.

Furthermore, when the urethane-based resin particles or acrylic-based resin particles as described above are used as the resin particles 201, the resin composing these resin particles preferably exhibits a predetermined glass transition temperature Tg.

More precisely, when the urethane-based resin particles are used as the resin particles 201, the glass transition temperature Tg of the urethane-based resin is preferably within a range of -40°C to 40°C. When the acrylic-based resin particles are used as the resin particles 201, the glass transition temperature Tg of the acrylic-based resin is preferably within a range of 40°C to 160°C.

A constituent resin of the resin particles used as the resin particles 201 has the above glass transition temperature Tg, thereby making it possible that the resin particles 201 exhibit even more desirable toughness and ductility, and even if the resin particles 201 are deformed by an external force applied to the resin particles 201, they can quickly restore the shape they had before the impact was applied. This makes it possible to further prevent the occurrence of the pressure marks caused by the relative flattening of the binder resin at the deformed portion.

In addition, the use of the acrylic-based resin particles having the above glass transition temperature Tg as the resin particles 201 makes it possible to prevent the occurrence of the pressure marks as described above at a lower cost than when using the resin particles made of the urethane-based resin having the above glass transition temperature Tg.

When the urethane-based resin particles are used as the resin particles 201, the glass transition temperature Tg of the urethane-based resin is more preferably -10°C or higher. The glass transition temperature Tg of the urethane-based resin is more preferably 20°C or lower. When the acrylic-based resin particles are used as the resin particles 201, the glass transition temperature Tg of the acrylic-based resin is more preferably 40°C or higher. The glass transition temperature Tg of the acrylic-based resin is more preferably 120°C or lower.

The glass transition temperature Tg can be determined, for example, by thermomechanical analysis method (TMA), in which a needle is inserted through a surface of a particle to be measured and a constant temperature change is caused to measure a change in thermal expansion of the measurement object.

In the pre-painted steel sheet 1 of this embodiment, a content percentage of the resin particles 201 in the painting layer 20 per side is 1.0 to 15.0 mass% relative to a total solid content mass of the painting layer 20. When the content percentage of the resin particles 201 in the painting layer 20 per side is less than 1.0 mass%, the content percentage of the resin particles 201 is too small and the desired design properties with both the grainy and matte-tone appearances cannot be exhibited. When the content percentage of the resin particles 201 in the painting layer 20 per side is 1.0 mass% or more, the desired design properties can be achieved as the pre-painted steel sheet 1. The content percentage of the resin particles 201 in the painting layer 20 per side is preferably 2.0 mass% or more, and more preferably 3.0 mass% or more.

On the other hand, when the content percentage of the resin particles 201 in the painting layer 20 per side is more than 15.0 mass%, the scratch resistance required for the painting layer 20 cannot be achieved as a result of the content percentage of the resin particles 201 becoming too high. When the content percentage of the resin particles 201 in the painting layer 20 per side is 15.0 mass% or less, it is possible to achieve the desired design properties while ensuring the scratch resistance required for the painting layer 20. The content percentage of the resin particles 201 in the painting layer 20 per side is preferably 12.0 mass% or less, and more preferably 9.0 mass% or less.

### «Film-forming components 203»

In addition to the above resin particles 201, the painting layer 20 of this embodiment has the binder resin and the color pigment as the film-forming components. In the following, such film-forming components 203 will be explained in detail.

### ◊ Binder resin

Any material can be used as the binder resin serving as one kind of the film-forming components 203 in the painting layer 20 of this embodiment, as long as it functions as a binder for the resin particles 201. However, from viewpoints of simplicity and cost-effectiveness of manufacture and the viewpoints of corrosion resistance and scratch resistance, it is preferable to use various organic resins as the binder resin. Examples of such a binder resin include the acrylic-based resin, the polyester-based resin, the urethane-based resin, the fluorine-based resin, and other organic resins, for example.

Further, in the painting layer 20 of this embodiment, it is more preferable to select the same type of resin as the resin particles 201 used, as the binder resin. This improves affinity between the resin particles 201 and the binder resin to make it possible to further improve the adhesion and barrier properties of the painting layer 20.

### ◊ Color pigment

The color pigment serving as one kind of the film-forming components 203 in the painting layer 20 of this embodiment is not limited, and various known coloring agents can be appropriately used depending on a color tone desired for the painting layer 20. Examples of such coloring agents include, for example, an aluminum pigment, titanium oxide, zinc oxide, zirconium oxide, calcium carbonate, barium sulfate, kaolin clay, carbon black, iron oxide, hansa yellow, pyrazolone orange, phthalocyanine, azo-based pigment carbon black, and other coloring agents. Further, a content thereof can also be set appropriately, which is about 3 to 60 mass%, for example.

### ◊ Other components

The painting layer 20 of this embodiment may have various additives, such as cross-linking agents, as necessary in addition to the resin particles 201, the binder resin and the color pigment as the film-forming components 203 as described above.

Further, the painting layer 20 of this embodiment may further contain additives such as an anticorrosive pigment, extender pigment, surface-modified metal powders or glass powders, a dispersing agent, a leveling agent, wax, and aggregates, a diluting solvent, and so on as necessary, within a range that does not impair the above-described effects.

Here, when the anticorrosive pigment is contained in the painting layer 20, its content is preferably set to about 1 to 15 mass%, for example. Further, various known anticorrosive pigments can be used as the anticorrosive pigment.

### <Compressive elastic moduli of resin particle 201 and binder resin>

In the painting layer 20 of this embodiment, the compressive elastic modulus of the resin particle 201 as described above at 25°C is within a range of 60 to 250 MPa, the compressive elastic modulus of the binder resin as described above at 25°C is within a range of 60 to 150 MPa, and the compressive elastic modulus of the binder resin at 25°C is preferably equal to or less than the compressive elastic modulus of the resin particle 201 at 25°C.

When the compressive elastic moduli of the resin particle 201 and the binder resin at 25°C satisfy all of the above relationships, the binder resin can more easily follow deformation of the resin particles 201 when the resin particles are deformed by an external force applied to the resin particles 201 (in other words, the binder resin can more easily deform in accordance with the deformation of the resin particles 201). As a result, excess voids between the resin particles 201 and the binder resin are prevented, and the adhesion and barrier properties of the painting layer 20 are further improved.

Here, the compressive elastic modulus of the resin particle 201 at 25°C is more preferably 90 MPa or higher. The compressive elastic modulus of the resin particle 201 at 25°C is more preferably 210 MPa or lower. The compressive elastic modulus of the binder resin at 25°C is more preferably 80 MPa or higher. The compressive elastic modulus of the binder resin at 25°C is more preferably 130 MPa or lower.

The compressive elastic moduli of the resin particle 201 and the binder resin at 25°C can be identified by focusing on a cross-section obtained by cutting the painting layer 20 of this embodiment in a thickness direction and measuring a compressive stress-strain curve for each of the resin particles 201 and the binder resin. In more detail, a nanoindenter as an indenter is pressed into each of the portions corresponding to the resin particle 201 and the binder resin in the focused cross-section, and a load and displacement are measured in accordance with JIS K 7181:2011. At this time, a measurement temperature is set to 25°C. The compressive stress-strain curve can be obtained for each of the resin particle 201 and the binder resin through such measurement. From the obtained compressive stress-strain curves, the compressive elastic moduli of the resin particle 201 and the binder resin can be calculated in accordance with JIS K 7181:2011.

The above measurements should be carried out at least at 10 locations for each of the resin particles 201 and the binder resin, and average values of the obtained plurality of compressive elastic moduli should be the compressive elastic moduli of the resin particle 201 and the binder resin in focus.

### <Present state of resin particles 201 in painting layer 20>

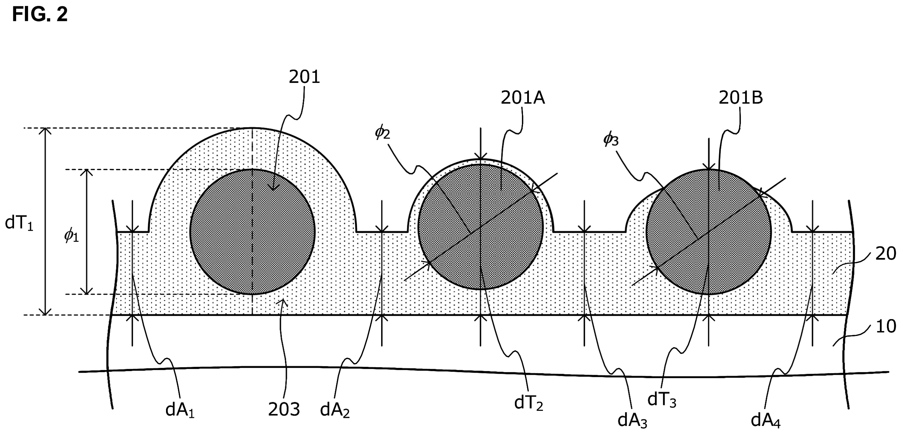

A distribution state of the resin particles 201 in the painting layer 20 of this embodiment will then be explained in detail with reference to FIG. 2. FIG. 2 is an explanatory diagram for explaining the painting layer in the pre-painted steel sheet of this embodiment.

As mentioned earlier, in the pre-painted steel sheet 1 of this embodiment, the resin particles 201 are present in the dispersed state in the film-forming components 203, such as the binder resin and the color pigment, which form the painting layer 20. In discussing the present state of such resin particles 201, the cross-section obtained by cutting the painting layer 20 of this embodiment in the thickness direction at any position is focused on, as schematically illustrated in FIG. 2. The cross-section is then observed with an electron microscope (more precisely, with a field emission scanning electron microscope (FE-SEM)) to discuss the present state of the resin particles 201.

In more detail, an area of 400 µm in length in a direction perpendicular to the thickness direction (hereinafter, also referred to as a width direction) is set as an observation visual field area in a single microscopic observation, in the cross-section of the painting layer 20 cut in the thickness direction at any position. In the focused cross-section, 10 such observation visual field areas are arbitrarily set. Then, a feature amount representing the present state of the resin particles 201 is calculated, as described below, based on the measurement results obtained at the 10 locations.

### ◊ Average area ratio of resin particles 201 in cross-section

An average value of area ratios, each of which is a percentage of area occupied by the resin particles 201 in the cross-section as described above in the painting layer 20 of this embodiment (that is, an average area ratio), is within a range of 5 to 40%.

The average area ratio is calculated as follows. That is, one observation visual field area (length in the width direction: 400 µm) is focused in the focused cross-section. In this case, a magnification of the FE-SEM should be set to an appropriate magnification (for example, about 300 times) so that the painting layer with the length of 400 µm in the width direction can be contained in one field of view. The area percentage of the resin particles 201 to the total area of the painting layer in the observation visual field area of such size (that is, the area ratio) is then calculated using various functions implemented in the electron microscope, by image processing, or the like. When only a part of a certain resin particle 201, but not the entirety thereof, is present in the visual field, the area percentage is calculated for the part of the particle present in the visual field. Ten measurement values of the area ratios of the resin particles 201 can be obtained by conducting the above observation for any 10 observation visual field areas. An average value of the 10 measurement values obtained in this manner is calculated to be the average area ratio of the resin particles 201 in the cross-section. Thus, such average area ratio is the average value of the area percentages of the resin particles to the total area of the painting layer in the observed 10 observation visual field areas.

When the average area ratio of the resin particles 201 in the cross-section is less than 5%, a presence percentage of resin particles 201 is too small to achieve the desired design properties. The average area ratio of the resin particles 201 is 5% or more, thereby making it possible to achieve the excellent design properties with both the grainy and matte-tone appearances. The average area ratio of the resin particles 201 in the cross-section is preferably 8% or more, and more preferably 10% or more.

On the other hand, when the average area ratio of the resin particles 201 in the cross-section is more than 40%, not only the scratch resistance required for the painting layer 20 cannot be achieved, but also the desired design properties (especially, the matte-tone appearance) cannot be achieved as a result of too many presence percentage of the resin particles 201. The average area ratio of the resin particles 201 is 40% or less, thereby making it possible to achieve the desired design properties while achieving the scratch resistance required for the painting layer 20. The average area ratio of the resin particles 201 in the cross-section is preferably 38% or less, and more preferably 35% or less.

### ◊ Average thickness dA of painting layer 20 at each portion not containing resin particles 201

An average thickness dA of the painting layer 20 at each portion of the painting layer 20 of this embodiment not containing the resin particle 201 in the cross-section as described above is within a range of 10 to 40 µm. When the average thickness dA of the painting layer 20 at each portion not containing the resin particle 201 in the cross-section is less than 10 µm, the thickness of the painting layer 20 is too thin to achieve the desired corrosion resistance. When the average thickness dA is 10 µm or more, the corrosion resistance required for the pre-painted steel sheet 1 of this embodiment can be achieved. The average thickness dA is preferably 13 µm or more, and more preferably 15 µm or more.

On the other hand, when the average thickness dA of the painting layer 20 at each portion not containing the resin particle 201 in the cross-section is more than 40 µm, the painting layer 20 is too thick and the adhesion of the painting layer 20 decreases, which is not desirable. When the average thickness dA is 40 µm or less, the desired corrosion resistance can be achieved while ensuring the adhesion of the painting layer 20. The average thickness dA is preferably 30 µm or less, and more preferably 25 µm or less.

The average thickness dA of the painting layer 20 at each portion not containing the resin particle 201 in the cross-section, as described above, is identified by the following procedure. First, the thicknesses of the painting layer 20 at the portion where the resin particle 201 is not present are measured at 10 locations in one focused observation visual field area. The thickness of the painting layer 20 at the portion not containing the resin particle 201 can be measured using a length measurement function or the like implemented in the FE-SEM. An average value of the obtained 10 measurement values is then calculated to set it as an average value of the thickness of the painting layer 20 in the focused observation visual field area. The above operation is performed for any 10 observation visual field areas, and the average values obtained from respective observation visual field areas are further averaged over the number of visual fields. The value thus obtained is the average thickness dA of the painting layer 20 at each portion not containing the resin particle 201.

It is assumed that in one focused observation visual field area, measurement results of thicknesses dA₁, dA₂, dA₃, and dA₄ are obtained at four locations, respectively, where the resin particles 201 are not present, as illustrated in FIG. 2. In this case, an average value of the thicknesses of the painting layer 20 in one focused observation visual field area is (1/4) × (dA₁ + dA₂ + dA₃ + dA₄). This observation is performed for any 10 observation visual field areas, and the obtained plurality of average values are further averaged by the number of visual fields to obtain the average thickness dA of the painting layer 20 at each portion not containing the resin particle 201.

### ◊ Relationship between average particle size ø of resin particles 201 and average thickness dA of painting layer 20

In the cross-section of the painting layer 20 of this embodiment, an average particle size ø of the resin particles 201 is 4.0 times or less than the average thickness dA identified as above. In other words, a relationship ø ≤ 4.0 × dA is established in the painting layer 20 of this embodiment.

When the average particle size ø of the resin particles 201 in the cross-section of the painting layer 20 of this embodiment is more than 4.0 times the average thickness dA of the painting layer 20, the average particle size ø of the resin particles 201 is too large for the average thickness dA, making it difficult for the resin particles 201 to be stably held by the painting layer 20. As a result, the resin particles 201 are more likely to drop out, and the desired design properties cannot be achieved. A value of a ratio (ø/dA) of the average particle size ø to the average thickness dA is preferably 3.8 or less, and more preferably 3.5 or less.

Here, in the painting layer 20 of this embodiment, the average particle size ø of the resin particles 201 is preferably within a range of 9 to 70 µm. When the average particle size ø of the resin particles 201 is within the range of 9 to 70 µm, it is easier to achieve the desired design properties in a more favorable state while achieving the scratch resistance required for the painting layer 20 in a more favorable state.

The average particle size ø of the resin particles 201 is more preferably 13 µm or more, and even more preferably 17 µm or more. The average particle size ø of the resin particles 201 is more preferably 60 µm or less, and even more preferably 55 µm or less.

The average particle size ø of the resin particles 201 in the cross-section as described above is identified by the following procedure. First, any observation target area as described above is focused in the cross-section obtained by cutting the painting layer 20 at any position. In such an observation target area, circle-equivalent diameters of the resin particles 201 present in the area are measured. An average value of a plurality of measured circle-equivalent diameters in the focused observation visual field area is then calculated. Such measurements are carried out for any 10 observation visual field areas, and average values obtained from respective observation visual field areas are further averaged over the number of visual fields. The value thus obtained is set as the average particle size ø of the resin particles 201.

In one focused observation visual field area, it is assumed that there are three resin particles 201 in the visual field as illustrated in FIG. 2, and ø1, ø2, and ø3 are obtained as the circle-equivalent diameters of the resin particles 201. In this case, (1/3) × (ø1 + ø2 + ø3) is calculated as the average value of the circle-equivalent diameters of the resin particles 201 in the observation visual field area. Such measurements are carried out for any 10 observation visual field areas in the specified cross-section, and the average particle size ø of the resin particles 201 is obtained by further averaging the obtained plurality of average values by the number of visual fields.

The value of the ratio (ø/dA) of the average particle size ø to the average thickness dA is preferably 0.2 or more, more preferably 0.3 or more, even more preferably 1.0 or more, and further more preferably more than 1.0. When the average particle size ø is less than 0.2 of the average thickness dA of the painting layer 20, the average particle size *ø* of the resin particles 201 is too small for the average thickness dA, and the resin particles 201 are completely buried in the painting layer 20, making it difficult for the resin particles 201 to contribute to surface irregularities, resulting in that the desired design properties cannot be achieved.

### ◊ Average substantial thickness dB of painting layer 20

In the above-mentioned cross-section in the painting layer 20 of this embodiment, a portion containing the resin particle 201 is focused. At such a portion of the painting layer 20 containing the resin particle 201, a thickness obtained by subtracting a thickness of the portion corresponding to the resin particle 201 from an overall thickness of the painting layer 20 including the resin particle 201 is referred to as a substantial thickness of the painting layer 20 at the portion containing the resin particle 201.

The overall thickness of the painting layer 20 including the resin particle 201 is a length from a position of an interface on the zinc-based plated steel sheet 10 side of the painting layer 20 to the surface of the painting layer 20 at a position of the portion containing the resin particle 201 in the cross-section (a length to the surface of the painting layer 20 in a direction parallel to a surface normal direction of the zinc-based plated steel sheet 10). The thickness of the portion corresponding to the resin particle 201 shall be a total length of the portion corresponding to the resin particle 201 in the direction parallel to the surface normal direction of the zinc-based plated steel sheet 10 at the portion focused on the overall thickness as described above.

When an average value of the substantial thicknesses at the portions each containing the resin particle 201, as defined above, is referred to as an average substantial thickness dB, such an average substantial thickness dB is within a range of 4 to 30 µm.

When the average substantial thickness dB of the painting layer 20 is less than 4 µm in the cross-section as described above in the painting layer 20 of this embodiment, an amount of the film-forming components 203 at the portion where the resin particle 201 is present is too small, resulting in that the resin particle 201 tends to drop out and the desired design properties cannot be achieved. Also, the corrosion resistance and scratch resistance required for the painting layer 20 cannot be achieved as a result of the amount of the film-forming components 203 being too small. The average substantial thickness dB of the painting layer 20 is 4 µm or more, thereby making it possible to achieve the desired design properties while achieving the corrosion resistance and scratch resistance required for the painting layer 20. The average substantial thickness dB of the painting layer 20 is preferably 5 µm or more, and more preferably 7 µm or more.

On the other hand, when the average substantial thickness dB of the painting layer 20 is more than 30 µm in the cross-section as described above in the painting layer 20 of this embodiment, the desired design properties (especially, the matte-tone appearance) cannot be achieved as a result of too much of the film-forming components 203 at the portion where the resin particle 201 is present. The desired design properties can be achieved when the average substantial thickness dB of the painting layer 20 is 30 µm or less. The average substantial thickness dB of the painting layer 20 is preferably 28 µm or less, and more preferably 25 µm or less.

The average substantial thickness dB in the cross-section as described above is identified by the following procedure. First, any observation target area as described above is focused in the cross-section obtained by cutting the painting layer 20 at any position. In such an observation target area, any position where the resin particle 201 is present is focused, and the overall thickness of the painting layer 20 and the thickness at the portion corresponding to the resin particle 201 are measured. Using the two measurement values obtained, the substantial thickness of the painting layer 20 at the focused position can be obtained by performing subtraction (the overall thickness of the painting layer 20 - the thickness at the portion corresponding to the resin particle 201). Such measurements and calculations are carried out at any 10 locations in the focused observation target area. An average value of the substantial thicknesses in the focused observation target area can be obtained by averaging the obtained plurality of measurement values of the substantial thicknesses by the number of observation locations. Such measurements are carried out at any 10 observation visual field areas, and the average values obtained from respective observation visual field areas are further averaged over the number of visual fields. The value thus obtained is set as the average substantial thickness dB of the painting layer 20.

In one focused observation visual field area, it is assumed that there are three resin particles 201 in the visual field, as illustrated in FIG. 2. When a spherical resin particle 201 located at a leftmost side is focused, a thickness corresponding to the resin particle 201 is ø₁, which is the particle size of the resin particle 201. When the overall thickness of the painting layer 20 is dT₁, then the substantial thickness dB₁ at this portion is dT₁ - ø₁. Similarly, when a spherical resin particle 201A located at a center of FIG. 2 is focused, a thickness corresponding to the resin particle 201A is ø₂, which is the particle size of the resin particle 201A. When the overall thickness of the painting layer 20 is dT₂, the substantial thickness dB₂ at this portion is dT₂ - ø₂. Similarly, when a spherical resin particle 201B located at a rightmost side of FIG. 2 is focused, a thickness corresponding to the resin particle 201B is ø₃, which is the particle size of the resin particle 201B. When the overall thickness of the painting layer 20 is dT₃, the substantial thickness dB₃ at this portion is dT₃ - ø₃. By carrying out such measurements at any 10 locations in the observation target area, an average value of the substantial thicknesses in the focused observation target area can be obtained.

### ◊ Average number ratio of exposed resin particles

In the above cross-section of the painting layer 20 of this embodiment, the resin particle 201 that has a portion where an outer periphery of the resin particle 201 is not covered with the film-forming components 203 with a thickness of 1 µm or more is referred to as an exposed resin particle.

Such an exposed resin particle includes not only those in which a part of the resin particle is not covered with the film-forming components 203 and is exposed such as the resin particle 201B illustrated on the rightmost side of FIG. 2, but also those in which the outer periphery of the resin particle is covered with the film-forming components 203, but the thickness of the film-forming components 203 covering the outer periphery is less than 1 µm such as the resin particle 201A illustrated at the center of FIG. 2.

An average value of the number ratios of the exposed resin particles (hereinafter, referred to as the average number ratio) in the above-mentioned cross-section in the painting layer 20 of this embodiment is 5 to 50%. When the average number ratio of the exposed resin particles is less than 5%, a surface appearance lacks the graininess, which is undesirable because the desired design properties are not achieved. When the average number ratio of the exposed resin particles is 5% or more, it is possible to achieve the grainy appearance, which is desirable because it enables the desired design properties to be achieved. The average number ratio of the exposed resin particles is preferably 8% or more, and more preferably 10% or more.

On the other hand, when the average number ratio of the exposed resin particles is more than 50%, the percentage of the exposed resin particles 201 on the surface of the painting layer 20 is too large, resulting in the resin particles 201 dropping out easily, and the desired scratch resistance cannot be achieved. When the average number ratio of the exposed resin particles is more than 50%, the percentage of the exposed resin particles 201 on the surface of the painting layer 20 becomes too large, resulting in the desired design properties (in particular, the matte-tone appearance) cannot be achieved. When the average number ratio of the exposed resin particles is 50% or less, the desired design properties can be achieved while ensuring the scratch resistance required for the painting layer 20. The average number ratio of the exposed resin particles is preferably 47% or less, and more preferably 45% or less.

In the cross-section as described above in the painting layer 20 of this embodiment, 80% or more of a length along the outer periphery of the exposed resin particle is preferably covered with the film-forming components 203. By having 80% or more of the length along the outer periphery of the exposed resin particle covered with the film-forming components 203, even the exposed resin particle is less likely to drop out of the painting layer 20, and the deterioration of the scratch resistance and design properties can be further prevented. It is more preferable that 85% or more of the length along the outer periphery of the exposed resin particle is covered with the film-forming components 203.

The average number ratio of the exposed resin particles in the cross-section is identified by the following procedure. First, any observation target area as described above is focused in the cross-section obtained by cutting the painting layer 20 at any position. In such an observation target area, the number of all resin particles 201 present in the area is counted, and those corresponding to the exposed resin particles are identified and their number is counted, to determine their number ratio. In this case, when only a part of a certain particle, rather than the entirety thereof, is present in the visual field, the number of particles is counted to one decimal place, for example, 0.1 to 0.9, depending on the area proportion of the particle present in the visual field. Such a measurement is carried out for any 10 observation visual field areas, and the number ratio measurement results obtained from respective observation visual field areas are further averaged over the number of visual fields. A value obtained in this way is set as the average number ratio of the exposed resin particles. When the obtained value includes a decimal point when calculating the above average number ratio, the decimal point is rounded down.

When calculating the average number ratio of the exposed particles, one observation visual field area (length in the width direction: 400 µm) is focused in the focused cross-section. In this case, the magnification of the FE-SEM should be set to an appropriate magnification (for example, about 300 times) so that the painting layer with the length of 400 µm in the width direction can be contained in one field of view.

To determine how much of the length along the outer periphery of the resin particle 201 is covered with the film-forming components 203, the length of the outer periphery of each exposed resin particle and the length of the portion exposed from the painting layer 20 are measured using the length measurement function or the like implemented in the FE-SEM to calculate a covered proportion. Such measurements are carried out for all exposed resin particles in the focused observation target area, and an average value of the obtained proportions is calculated. Such an operation is performed for any 10 observation visual field areas, and average values of the proportions obtained from the respective observation visual field areas are further averaged over the number of visual fields. The value thus obtained can be used as the proportion of the outer peripheries of the exposed resin particles.

### <Use of two types of resin particles 201>

In the painting layer 20 of this embodiment, it is preferable to use two types of resin particles with different average particle sizes as the resin particles 201 as described earlier. Hereinafter, the resin particle with a relatively large average particle size will be referred to as a large-size resin particle, and the resin particle with a relatively small average particle size will be referred to as a small-size resin particle.

In the painting layer 20 of this embodiment, it is possible to achieve remarkable unevenness on the surface of the painting layer 20, and to achieve high design properties (the grainy and matte-tone appearances) as described earlier by using the large-size resin particles as the resin particles 201. In addition, it is possible to achieve unevenness with a milder degree of protrusion than that formed by the large-size resin particles, and also to form surface undulations that gently connect the unevenness formed by the large-size resin particles by using the small-size resin particles as the resin particles 201. As a result, the design properties of the pre-painted steel sheet 1 of this embodiment can be further improved.

In the painting layer 20, it has been referred to as "the portion containing the resin particle 201" and "the portion not containing the resin particle 201". When the large-size resin particles and the small-size resin particles as described above are used as the resin particles 201, "the portion not containing the resin particle 201" refers to the portion that does not contain either the large-size resin particles or the small-size resin particles.

In the painting layer 20 of this embodiment, the large-size resin particle with an average particle size within a range of 40 to 70 µm, having a peak within a range of 55 ± 10 µm in particle size when a particle size distribution is measured is preferably used as the large-size resin particle, and the small-size resin particle with an average particle size within a range of 9 to 26 µm, having a peak within a range of 17 ± 8 µm in particle size when the particle size distribution is measured is preferably used as the small-size resin particle. It is possible to further improve the design properties of the pre-painted steel sheet 1 by using such large-size resin particles and small-size resin particles.

The large-size resin particle with the average particle size within a range of 45 to 65 µm, giving the peak within a range of 55 ± 5 µm in particle size is more preferred, and the small-size resin particle with the average particle size within a range of 12 to 22 µm, giving the peak within a range of 17 ± 5 µm in particle size is more preferred.

Here, it is preferable that a ratio (øL/øH) of an average particle size øL of the small-size resin particles to an average particle size øH of the large-size resin particles be within a range of 0.14 to 0.58. When the ratio (øL/øH) of the average particle sizes is within the above range, the design properties of the pre-painted steel sheet 1 of this embodiment can be further improved. The ratio (øL/øH) of the average particle sizes is more preferably 0.20 or more. The ratio (øL/øH) of the average particle sizes is more preferably 0.50 or less.

In the painting layer 20 of this embodiment, a content percentage CL of the small-size resin particles is preferably within a range of 5 to 30 mass% relative to the total solid content mass of the painting layer 20, and a content percentage CH of the large-size resin particles is preferably within a range of 5 to 30 mass% relative to the total solid content mass of the painting layer 20. When the content percentage CL of the small-size resin particles and the content percentage CH of the large-size resin particles are within the above ranges, the design properties of the pre-painted steel sheet 1 can be further improved.

The content percentage CL of the small-size resin particles is more preferably 7 mass% or more relative to the total solid content mass of the painting layer 20. The content percentage CL of the small-size resin particles is more preferably 25 mass% or less relative to the total solid content mass of the painting layer 20. The content percentage CH of the large-size resin particles is more preferably 7 mass% or more relative to the total solid content mass of the painting layer 20. The content percentage CH of the large-size resin particles is more preferably 25 mass% or less relative to the total solid content mass of the painting layer 20.

In the painting layer 20 of this embodiment, a ratio (CL/CH) of the content percentage CL of small-size resin particles to the content percentage CH of large-size resin particles is preferably within a range of 0.5 to 1.5. When the ratio (CL/CH) of the content percentages is within the above range, the design properties of the pre-painted steel sheet 1 can be further improved. The ratio (CL/CH) of the content percentages is more preferably 0.7 or more. The ratio (CL/CH) of the content percentages is more preferably 1.3 or less.

In the painting layer 20 of this embodiment, the compressive elastic modulus of the small-size resin particle at 25°C is preferably within the range of 60 to 250 MPa, and that of the large-size resin particle at 25°C is preferably within the range of 60 to 250 MPa. When an external force is applied to the resin particles, the applied force can be dispersed more efficiently, and the design properties of the pre-painted steel sheet 1 can be further prevented from deteriorating when the compressive elastic moduli of the small-size resin particle and the large-size resin particle are within the above ranges. The compressive elastic modulus of the small-size resin particle at 25°C is more preferably 90 MPa or higher. The compressive elastic modulus of the small-size resin particle at 25°C is more preferably 210 MPa or lower. The compressive elastic modulus of the large-size resin particle at 25°C is more preferably 90 MPa or higher. The compressive elastic modulus of the large-size resin particle at 25°C is more preferably 210 MPa or lower.

Here, the average particle sizes and contents of the large- and small-size resin particles can be identified by the cross-section observation, for example, as follows, though it is not limited. First, any observation target area as described above is focused in the cross-section obtained by cutting the painting layer 20 at any position. In such an observation target area, the circle-equivalent diameters of the resin particles 201 present in the area are measured. An average value of the plurality of measured circle-equivalent diameters in the focused observation target area is then calculated. Such measurements are carried out for any 10 observation visual field areas, and a particle size distribution obtained from each observation visual field area is taken. The resin particle with a particle size of 40 µm or more is defined as the large-size resin particle, and an average of these particle sizes is taken as the average particle size of the large-size resin particles. On the other hand, the resin particle with a particle size of 30 µm or less is defined as the small-size resin particle, and an average of these particle sizes is taken as the average particle size of the small-size resin particles.

The content percentage of the resin particles can be measured as follows. First, a total mass per unit volume of the paint film, including the resin particles, is calculated from a volume of the paint film calculated from the average thickness dA of the paint film determined by the cross-section observation and a mass difference when the paint film is removed from the steel sheet using an organic solvent or remover. Similarly, a total mass of the resin particles contained in the painting layer per unit volume is calculated from the average particle size of the particle sizes of the resin determined by the cross-section observation, converted to the volume of the resin particles, and when a specific gravity of the resin particles is set to 1.2. The content percentage of the resin particles can be calculated from the total mass per unit volume of the paint film and the total mass of the resin particles per unit volume described above.

The compressive elastic moduli of the large- and small-size resin particles at 25°C can be measured according to the previously described method for measuring the compressive elastic moduli of the resin particle and the binder resin.

The above is a detailed description of the painting layer 20 of this embodiment with reference to FIG. 2.

### [Painting layer 25]

The painting layer 25 that may be held by the pre-painted steel sheet 1 of this embodiment may have the same configuration as the above painting layer 20, except that it does not have the resin particles 201 as explained earlier. That is, such a painting layer 25 has at least the binder resin as film-forming components 205, and may further have various color pigments and additives that the painting layer 20 may contain, as explained earlier. Therefore, a detailed description of the painting layer 25 of this embodiment is omitted below.

### [Anti-corrosion coating layer 30]

Next, the anti-corrosion coating layer 30 provided between the zinc-based plated steel sheet 10 and the painting layer 20, as necessary, in the pre-painted steel sheet 1 of this embodiment will be briefly described. Such an anti-corrosion coating layer 30 is a coating layer containing an anticorrosive pigment and a resin.

The resin contained in the anti-corrosion coating layer 30 functions as film-forming components, and any material can be used. However, various organic resins are preferred as such a resin from viewpoints of simplicity and cost-effectiveness of manufacture, as well as corrosion resistance and scratch resistance. Examples of such resins include, for example, the acrylic-based resin, the polyester-based resin, the urethane-based resin, the fluorine-based resin, and other organic resins.

The anti-corrosion coating layer 30 of this embodiment can contain various known anticorrosive pigments as the anticorrosive pigments. However, the anti-corrosion coating layer 30 of this embodiment preferably contains pigments containing at least one or more elements from among P, V, Si, and Mg as such anticorrosive pigments.

Examples of the pigments containing at least one or more elements from among P, V, Si, and Mg include, for example, zinc phosphate, zinc phosphite, zinc magnesium phosphate, magnesium phosphate, magnesium phosphite, silica, calcium ion-exchange silica, zirconium phosphate, aluminum dihydrogen tripolyphosphate, zinc oxide, zinc molybdophosphate, barium metaborate, strontium chromate, and other pigments.

An average thickness of the anti-corrosion coating layer 30 is not limited, and should be, for example, about 3.0 to 12.0 µm.

When a painting layer exists between the zinc-based plated steel sheet 10 and the painting layer 20, such as the anti-corrosion coating layer 30, the average thickness dA at each portion of the painting layer 20 not containing the resin particle and the average substantial thickness dB, which is the average value of the substantial thicknesses at each portion containing the resin particle, include the thickness of the painting layer such as the anti-corrosion coating layer 30 between the zinc-based plated steel sheet 10 and the painting layer 20.

### <Gloss level of pre-painted steel sheet 1>

One of the characteristics corresponding to the high design properties exhibited by the pre-painted steel sheet 1 of this embodiment is a gloss level, which exhibits the matte-tone appearance. The gloss level is explained in detail below.

In the pre-painted steel sheet 1 of this embodiment, when a 60-degree specular gloss G_{S} (60°) specified in JIS Z 8741:1997 is measured on the surface of the painting layer 20 containing the resin particle 201, a value of the 60-degree specular gloss G_{S} (60°) is preferably within a range of 3 or higher and 30 or lower. In the pre-painted steel sheet 1 of this embodiment, the surface of the painting layer 20 exhibits the gloss level in the above range, making the pre-painted steel sheet 1 of this embodiment possible to exhibit the more excellent matte-tone appearance (and thus excellent design properties). The value of the 60-degree specular gloss G_{S} (60°) is more preferably 3 or higher. The value of the 60-degree specular gloss G_{S} (60°) is preferably 25 or lower.

### [Gloss level change before and after tensile elongation]

In the pre-painted steel sheet 1 of this embodiment, when the 60-degree specular gloss G_{S} (60°) specified in JIS Z 8741:1997 is measured on the surface of the painting layer 20 before and after tensile elongation of 30% is applied to the pre-painted steel sheet, a rate of change of the 60-degree specular gloss G_{S} (60°) before and after applying the tensile elongation is preferably 60% or less. Here, the application of the tensile elongation to the pre-painted steel sheet 1 can be performed using a tensile tester after taking a No. 5 test piece from the pre-painted steel sheet 1 in accordance with JIS Z2241: 2011.

When the rate of change of the 60-degree specular gloss G_{S} (60°) before and after applying 30% tensile elongation is 60% or less, the change in the gloss level before and after processing is suppressed even if various types of processing are applied to the pre-painted steel sheet 1 of this embodiment. As a result, the design properties of the pre-painted steel sheet 1 can be maintained even after various types of processing.

The rate of change of the 60-degree specular gloss G_{S} (60°) before and after applying 30% tensile elongation is more preferably 50% or less.

The 60-degree specular gloss G_{S} (60°) can be measured using various gloss meters in accordance with JIS Z 8741:1997.

The pre-painted steel sheet 1 of this embodiment has been described in detail above with reference to FIG. 1A to FIG. 2.

### (Manufacturing method of pre-painted steel sheet)

Subsequently, an example of a manufacturing method of the pre-painted steel sheet 1 of this embodiment is described.

First, a steel sheet as a base material is subjected to various pretreatments, including alkaline degreasing treatment, rinsing treatment, pickling treatment, and other treatments to make a steel sheet surface clean. Then, a zinc-based plating layer is formed on a surface of the base steel sheet. In this plating process, a plating bath having components that can achieve a desired plating composition is prepared, and the zinc-based plating layer is formed by various known methods. As a result, the zinc-based plated steel sheet 10, which is the base material of the pre-painted steel sheet 1 of this embodiment, can be manufactured.

Thereafter, various known anti-corrosion paints are applied to the zinc-based plated steel sheet, as necessary, to form the anti-corrosion coating layer 30 and allowed to dry. Here, the above-mentioned anti-corrosion paint can be applied by generally known coating methods, such as roll coating, curtain flow coating, air spray, airless spray, immersion, bar coating, brush coating, and other methods, for example. A heating method of the anti-corrosion paint is not limited, and any method can be used, for example, heating by hot air, near-infrared rays, far-infrared rays, induction heating, or a combination of these methods.

Next, a coating solution for forming the painting layer 20 is applied to the surface of the zinc-based plated steel sheet 10 on which the anti-corrosion coating layer has been formed as necessary, and then heated and dried to form the painting layer. Here, such a coating solution is prepared by making it contain the above resin particles, and the film-forming components containing the binder resin and color pigment, and various additives further, as necessary, in a solvent.

It is important that the application of the prepared coating solution be carried out using a curtain flow coater. By using the curtain flow coater to apply the coating solution containing particles, it is possible to apply the coating solution without allowing sedimentation of the particles or causing coating defects (roping).

After the coating solution is applied to the surface of the zinc-based plating layer (or the anti-corrosion coating layer), the coating solution is heated and cured. In this process, the heating temperature can be set according to the solvent used, but for example, it is preferable to set the temperature within a range of 180 to 250°C. When the coating solution is heated and cured, attention should be paid to a heating rate. More precisely, it is important to set the heating rate within a range of 5 to 50°C/sec. The painting layer 20 in which the particle condition as described earlier is achieved can be formed by applying the coating solution having the surface tension and viscosity as described above using the curtain flow coater and heat-curing under the circumstances of the heating rate as described above. The heating rate is more preferably within a range of 10 to 30°C/sec.

The heating method of the coating solution is not limited, and any method can be used, for example, heating by hot air, near-infrared rays, far-infrared rays, induction heating, or a combination of these methods.

The above is a description of the manufacturing method for the pre-painted steel sheet of this embodiment.

### EXAMPLES

The pre-painted steel sheet of this embodiment will be concretely explained below with reference to examples and comparative examples. Incidentally, the examples illustrated below are merely examples of the pre-painted steel sheet of this embodiment, and the pre-painted steel sheet of this embodiment is not limited to the examples below.

### <1. Preparation of top paint>

"VYLON (registered trademark) 500 (Tg 4°C)", "VYLON (registered trademark) 270 (Tg 50°C)", and "VYLON (registered trademark) UR-6100 (Tg -30°C)", amorphous polyester resins manufactured by TOYOBO CO., LTD. were dissolved in an organic solvent (mixed at a mass ratio of cyclohexanone: SOLVESSO 150 (trade name) = 1:1). Here, a mixing ratio of these polyester resins was adjusted.

Next, "CYMEL (registered trademark) 303", melamine resin manufactured by Allnex Japan Inc. and "SUPER BECKAMINE (registered trademark)", melamine resin manufactured by DIC Corporation were added to the above solution as curing agents. The melamine resins were added so that polyester resin solid content: melamine resin solid content = 70:30 at a mass ratio of solid content of resin. In addition, 0.5 mass% of "Catalyst 600", an acid catalyst manufactured by Allnex Japan Inc. was further added to this mixed solution of polyester resin and melamine resin. The mixed solution was stirred to obtain varnish paint. The polyester resin and melamine resin contained in the varnish paint mainly function as binder resins. The compressive elastic modulus of the binder resin was adjusted by adjusting the ratio of the polyester resin and the ratio of melamine resin.

### <2. Preparation of resin particle-containing paint>

"Art pearl (registered trademark)", urethane resin manufactured by Negami Chemical Industrial Co., Ltd., or "MBX", acrylic beads manufactured by Sekisui Chemical Co., Ltd. (with different particle size distribution) was prepared as the resin particles. Resin particle-containing paint was prepared by dispersing these resin particles in combination with the above top paint. At some levels, "TOKABLACK #7300", carbon black manufactured by Tokai Carbon Co., Ltd., and "R-820", titanium oxide manufactured by Ishihara Sangyo Kaisha, Ltd. were added as color pigments. Here, the color pigments were used so that the mass ratio of the above carbon black and titanium oxide (carbon black: titanium oxide) was 20:80. The amount of color pigments added was such that the mass ratio of the varnish solids to the coloring agent (varnish solids: coloring agent) was 92:8. The resin particle-containing paint was prepared by stirring the mixed solution.

In the following examples and comparative examples, examples where two peaks of the particle size distribution of the resin particles are present, one for the large-size resin particles and the other for the small-size resin particles, correspond to the resin particle-containing paint prepared using a combination of two types of resin particles each having one peak when the particle size distribution is observed.

### <3. Preparation of backside paint>

For the backside paint, "Flexicoat 100", polyester/melamine paint manufactured by Nipponpaint Industrial Coatings Co., Ltd. was used. In this case, beige color paint was used, colored with white pigment, yellow pigment, and other pigments. The gloss level was adjusted by adding fine silica particles as a gloss adjuster in the paint. A dry thickness was 5 µm.

### <4. Preparation of anti-corrosion paint>

"VYLON (registered trademark) 500 (Tg 4°C)" and "VYLON (registered trademark) 270 (Tg 50°C)", amorphous polyester resins manufactured by TOYOBO CO., LTD. were mixed so that the mass ratio was 1:1. Next, the polyester resin mixture was dissolved in an organic solvent (mixed at a mass ratio of cyclohexanone: SOLVESSO 150 (trade name) = 1:1) to prepare a primer varnish. "CORONATE HX", isocyanate manufactured by TOSOH Corporation was added to the primer varnish. An amount of isocyanate added was such that the mass ratio of the solid content of the varnish: isocyanate was 95:5. Furthermore, "K-WHITE #450H", condensed aluminum manufactured by TAYCA Co., Ltd., "SHIELDEX C303", calcium-modified silica manufactured by GRACE Co., Ltd., calcium vanadate apatite (reagent manufactured by FUJIFILM Wako Pure Chemical Corporation), and magnesium hydroxide (reagent manufactured by Kanto Chemical Co., Ltd.) were used respectively as the anticorrosive pigments. Each was added so that a concentration in a dried coating was 50 mass%, and the anti-corrosion paint was prepared by stirring the mixed solution.

### <5. Preparation of sample materials>

Next, Zn-0.2 mass%Al-plated steel sheet (GI), Zn-11 mass%Al-3 mass%Mg-0.2 mass%Si-plated steel sheet (SD), and Zn-6 mass%Al-3 mass% Mg-plated steel sheet (ZAM) (all manufactured by Nippon Steel Corporation) were used as the zinc-based plated steel sheets for the base materials. A thickness of each zinc-based plated steel sheet was 0.6 mm.

To improve the adhesion between the zinc-based plated steel sheet and the paint film, a chemical treatment film was formed on the surface of the zinc-based plated steel sheet prior to the application of the paint. The chemical treatment film was formed by applying a chromate-free chemical treatment solution "CT-E300N" manufactured by Nihon Parkerizing Co., Ltd. under conditions that resulted in an adhesion amount of 100 mg/m² after drying, and then drying at a steel sheet temperature of 60°C.

Two layers of the anti-corrosion paint and the resin particle-containing paint were applied to one side of the zinc-based plated steel sheet, and the backside paint was applied to the opposite side, then heated and baked. Here, a maximum sheet thickness temperature was set at 210°C for the anti-corrosion coating layer and 230°C for the painting layer containing the resin particle, and the heating rate was set at 5°C/second. The curtain flow coater was used to apply the above paints. A sample material was thereby prepared. Here, a plurality of sample materials were prepared for respective levels.

Various indexes for the average thickness dA, substantial thickness dB, and resin particles, the number ratio of the exposed resin particles, coverage, and so on were measured for each of the obtained sample materials in accordance with the previously described methods. The results obtained are summarized in Table 1 below.

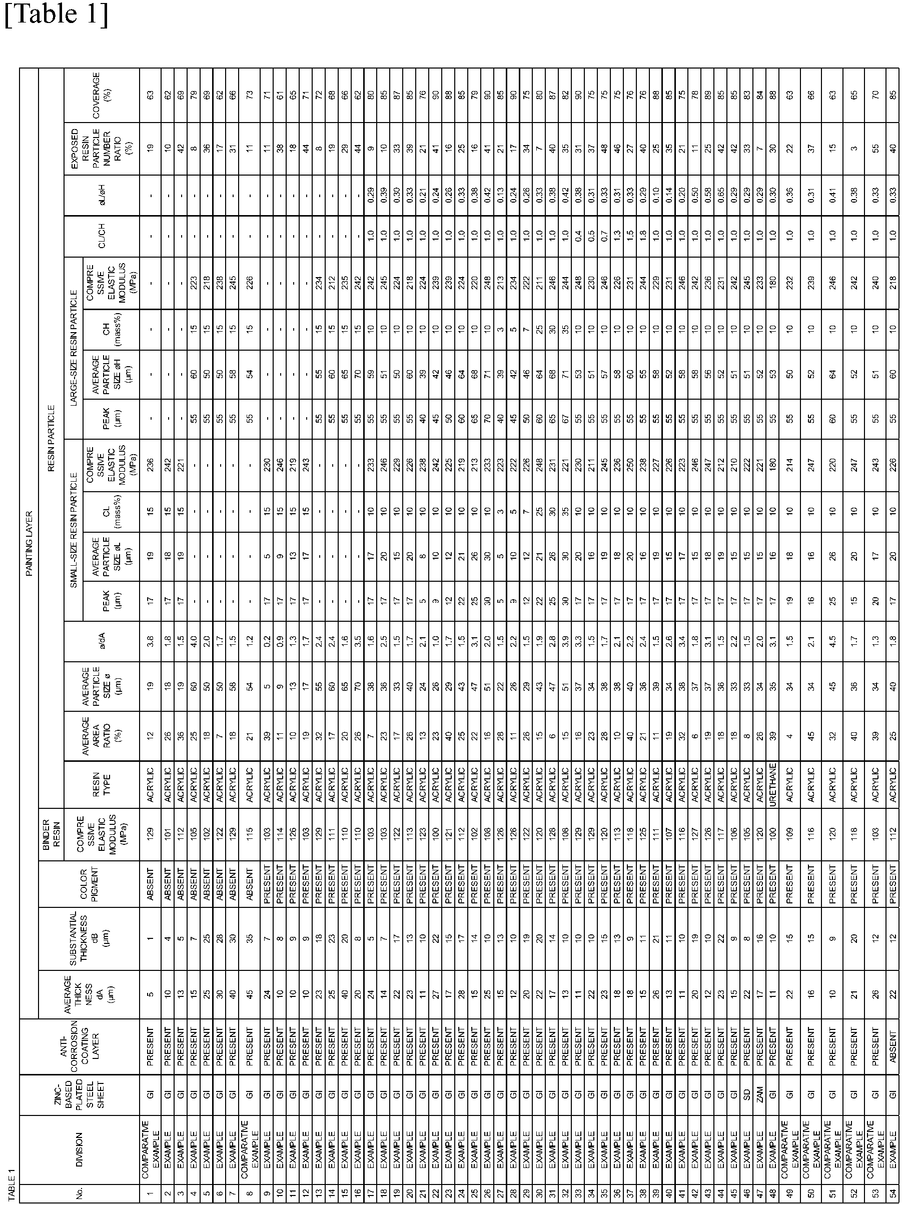

Each of the sample materials obtained as described above was evaluated in terms of the grainy appearance, corrosion resistance, rate of change in gloss level before and after tensile elongation, forming adhesion, and scratch resistance. Evaluation method is as follows.

### (Grainy appearance)

A resin molded article (with the grainy appearance, resin used: exterior material of iR ADVC5250F, a multifunction printer manufactured by Canon Inc.) was used apart from the surface of the sample material. Each of the sample material and the resin molded article was evaluated by visual observation from a distance of 20 cm to investigate whether the resin molded article could be distinguished from the sample material. Any 10 evaluators with visual acuity of 1.0 or better were selected. Among these 10 evaluators, a percentage of the number of evaluators who could distinguish between the two materials was calculated as a distinguishable percentage, which was used as the evaluation of design properties. Evaluation criteria were as follows. A passing level was set to 2 or higher.

### <Evaluation criteria>

Score 3: Distinguishable percentage is 30% or less
2: Distinguishable percentage is more than 30% and 60% or less
1: Distinguishable percentage is more than 60%

### (Corrosion resistance)

An X-shaped cut was formed on the surface of the sample material using an NT cutter. In this process, the flaw was made to reach the base metal sheet. The sample material was then subjected to 60 cycles of a combined cyclic corrosion test (CCT JASO M609) in accordance with JIS K 5600-7-9:2006. After the test, the sample material was cleaned and dried, and a maximum blister width from the X-shaped cut was measured. The maximum blister width on one side of the swelling that occurred on both sides of the flaw was measured. A 10x loupe was used for observation. The corrosion resistance was evaluated using the following evaluation criteria. The passing level was set to 2 or higher.

### <Evaluation criteria>

Score 3: Maximum blister width is less than 2 mm
2: Maximum blister width is 2 mm or more and less than 5 mm
1: Maximum blister width is 5 mm or more

### (Rate of change in gloss level before and after tensile elongation)

The 60-degree specular gloss GS (60°) as specified in JIS Z 8741:1997 was measured for each sample material before tensile elongation was applied. The gloss meter used was in accordance with JIS Z 8741:1997. The surface of the sample material was then subjected to a tensile process using a tensile tester so that the surface of the sample material reached 30% tensile elongation, and the 60-degree specular gloss G_{S} (60°), as specified in JIS Z 8741:1997, was measured at the portion where the surface reached 30% tensile elongation. The rate of change of the 60-degree specular gloss G_{S} (60°) was calculated before and after applying the tensile elongation using the obtained measurement values. The evaluation criteria were as follows. The passing level was set to 2 or higher.

### <Evaluation criteria>

Score 4: Rate of change in gloss level is 40% or less.
3: Rate of change in gloss level is more than 40% and 50% or less.
2: Rate of change in gloss level is more than 50% and 60% or less.
1: Rate of change in gloss level is more than 60%.

### (Forming adhesion)

When the surface of the sample material was subjected to 180-degree 0T bending with the evaluation surface facing outward in accordance with JIS K 5600:1999, the cross-section of the paint film was observed in an area of 5 mm centered at a top of the bend to determine whether any resin particles had dropped out. The cross-section of the paint film was observed using a scanning electron microscope (JSM-7200F, manufactured by JEOL Ltd.). The corrosion resistance was evaluated according to the following evaluation criteria. The passing level was set to 2 or higher.

### <Evaluation Criteria>

Score 3: No dropout of resin particle from the paint film is observed.
2: Five or fewer resin particles drop out of the paint film.
1: Six or more resin particles drop out of the paint film.

### (Scratch resistance)

The surface of the sample material was scratched on the paint film surface with a pencil method at 5H for a length of 5 mm in accordance with JIS K 5600:1999 to measure whether the large-size resin particles had dropped out. The surface of the scratched area was observed under an optical microscope. The corrosion resistance was evaluated using the following evaluation criteria. The passing level was set to 2 or higher.

### <Evaluation criteria>

Score 3: No dropout of resin particle from the paint film is observed.
2: Five or fewer resin particles drop out of the paint film.
1: Six or more resin particles drop out of the paint film.

The results obtained are summarized in Table 2 below.

### [Table 2]

**TABLE 2**

| No. | DIVISION | EVALUATION RESULT | | | | |
|---|---|---|---|---|---|---|
| | | GRAINY APPEARANCE | CORROSION RESISTANCE | RATE OF CHANGE IN GLOSS LEVEL | FORMING ADHESION | SCRATCH RESISTANCE |
| 1 | COMPARATIVE EXAMPLE | 2 | 1 | 1 | 1 | 1 |
| 2 | EXAMPLE | 2 | 2 | 2 | 2 | 2 |
| 3 | EXAMPLE | 2 | 2 | 2 | 2 | 2 |
| 4 | EXAMPLE | 2 | 2 | 2 | 2 | 2 |
| 5 | EXAMPLE | 3 | 2 | 2 | 2 | 2 |
| 6 | EXAMPLE | 2 | 2 | 2 | 2 | 2 |
| 7 | EXAMPLE | 2 | 2 | 2 | 2 | 2 |
| 8 | COMPARATIVE EXAMPLE | 2 | 2 | 1 | 2 | 2 |
| 9 | EXAMPLE | 2 | 3 | 2 | 3 | 2 |
| 10 | EXAMPLE | 2 | 2 | 2 | 2 | 2 |
| 11 | EXAMPLE | 2 | 2 | 2 | 2 | 2 |
| 12 | EXAMPLE | 2 | 3 | 2 | 2 | 2 |
| 13 | EXAMPLE | 3 | 2 | 2 | 2 | 2 |
| 14 | EXAMPLE | 3 | 3 | 2 | 2 | 2 |
| 15 | EXAMPLE | 2 | 3 | 2 | 2 | 2 |
| 16 | EXAMPLE | 3 | 2 | 2 | 2 | 2 |
| 17 | EXAMPLE | 3 | 2 | 3 | 2 | 3 |
| 18 | EXAMPLE | 3 | 2 | 3 | 3 | 3 |
| 19 | EXAMPLE | 3 | 3 | 4 | 3 | 3 |
| 20 | EXAMPLE | 3 | 3 | 4 | 3 | 3 |
| 21 | EXAMPLE | 3 | 3 | 3 | 2 | 3 |
| 22 | EXAMPLE | 2 | 3 | 3 | 3 | 3 |
| 23 | EXAMPLE | 3 | 2 | 3 | 3 | 3 |
| 24 | EXAMPLE | 3 | 3 | 3 | 3 | 3 |
| 25 | EXAMPLE | 3 | 2 | 3 | 2 | 3 |
| 26 | EXAMPLE | 3 | 2 | 3 | 3 | 3 |
| 27 | EXAMPLE | 3 | 3 | 2 | 3 | 2 |
| 28 | EXAMPLE | 3 | 3 | 3 | 3 | 3 |
| 29 | EXAMPLE | 3 | 2 | 3 | 2 | 3 |
| 30 | EXAMPLE | 3 | 2 | 3 | 2 | 3 |
| 31 | EXAMPLE | 3 | 2 | 3 | 3 | 3 |
| 32 | EXAMPLE | 3 | 2 | 3 | 2 | 3 |
| 33 | EXAMPLE | 3 | 3 | 3 | 2 | 3 |
| 34 | EXAMPLE | 3 | 3 | 3 | 2 | 3 |
| 35 | EXAMPLE | 3 | 2 | 3 | 2 | 3 |
| 36 | EXAMPLE | 3 | 2 | 3 | 2 | 3 |
| 37 | EXAMPLE | 3 | 2 | 3 | 2 | 3 |
| 38 | EXAMPLE | 3 | 2 | 3 | 2 | 3 |
| 39 | EXAMPLE | 2 | 3 | 3 | 3 | 2 |
| 40 | EXAMPLE | 3 | 2 | 3 | 3 | 3 |
| 41 | EXAMPLE | 3 | 3 | 3 | 2 | 3 |
| 42 | EXAMPLE | 3 | 2 | 3 | 2 | 3 |
| 43 | EXAMPLE | 2 | 3 | 3 | 3 | 3 |
| 44 | EXAMPLE | 3 | 2 | 3 | 3 | 2 |
| 45 | EXAMPLE | 3 | 2 | 4 | 3 | 3 |
| 46 | EXAMPLE | 3 | 2 | 3 | 2 | 3 |
| 47 | EXAMPLE | 3 | 2 | 3 | 2 | 3 |
| 48 | EXAMPLE | 2 | 3 | 3 | 3 | 3 |
| 49 | COMPARATIVE EXAMPLE | 2 | 2 | 1 | 3 | 1 |
| 50 | COMPARATIVE EXAMPLE | 3 | 2 | 2 | 1 | 2 |
| 51 | COMPARATIVE EXAMPLE | 3 | 1 | 2 | 1 | 2 |
| 52 | COMPARATIVE EXAMPLE | 1 | 2 | 1 | 3 | 1 |
| 53 | COMPARATIVE EXAMPLE | 2 | 2 | 2 | 1 | 2 |
| 54 | EXAMPLE | 3 | 3 | 4 | 3 | 3 |

As is clear from Table 2 above, the sample materials corresponding to the examples of the present invention exhibit excellent grainy appearance, corrosion resistance, rate of change in gloss level before and after tensile elongation, forming adhesion, and scratch resistance, while the sample materials corresponding to the comparative examples of the present invention fail in at least one of the grainy appearance, corrosion resistance, rate of change in gloss level before and after tensile elongation, forming adhesion, or scratch resistance.

In addition, productivity when No. 20 particle-containing paint shown in Table 1 above was applied with a curtain flow coater was compared to the case when it was applied with a roll coater generally used in the manufacture of pre-painted steel sheets. The roll coater was a two-roll coater made up of a pick-up roll and an applicator roll. A speed of the base material was varied from 10 mpm to 80 mpm in 10 mpm increments.

In the case of the curtain flow coater, a beautiful appearance was obtained when a sheet-passage speed was within a range of 50 to 80 mpm, and the performance was equivalent to that of No. 20 shown in Table 1 above. On the other hand, in the case of the roll coater, roping occurred when the sheet-passage speed was within a range of 20 to 80 mpm, while a beautiful appearance was obtained when the sheet-passage speed was 10 mpm, similar to that of the curtain flow coater. From these results, it can be said that the productivity is 5 to 8 times higher when painting with the curtain flow coater than with the roll coater, which is a general-purpose painting method.

The preferred embodiments of the present invention have been described in detail above with reference to the attached drawings, but the present invention is not limited to such examples. It is apparent that a person having common knowledge in the technical field to which the present invention belongs is able to devise various variation or modification examples within the range of technical ideas described in the claims, and it should be understood that such examples belong to the technical scope of the present invention as a matter of course.

The embodiment disclosed herein is an example in all respects and should not be considered to be restrictive. The above-described embodiment may be omitted, substituted, or modified in various forms without departing from the scope of the appended claims and the configuration and gist that fall within the technical scope of the present invention as described below. For example, configuration requirements of the above-described embodiment can be arbitrarily combined within a range that does not impair the effects. Further, the operations and effects about the configuration requirements relating to an arbitrary combination can be obtained as a matter of course from the combination, and those skilled in the art can obtain clear other operations and other effects from the description herein.

Further, the effects explained herein are merely explanatory or illustrative in all respects and not restrictive. That is, the technique relating to the present invention can offer other clear effects to those skilled in the art from the description herein, in addition to or in place of the above-described effects.

Note that the following configuration also belongs to the technical scope of the present invention.
(1) A pre-painted steel sheet including: a zinc-based plated steel sheet having a zinc-based plating layer, which is a plating layer containing at least zinc, located on a surface of a base steel sheet; and a painting layer located on a surface of the zinc-based plating layer, wherein
   the painting layer contains resin particles, and a binder resin and a color pigment as film-forming components,
   in a cross-section cut at any position of the painting layer in a thickness direction,
   an average value of area ratios, each of which is an area percentage occupied by the resin particles, is within a range of 5 to 40%,
   an average thickness dA at each portion of the painting layer not containing the resin particle is within a range of 10 to 40 µm,
   an average particle size ø of the resin particles is 4.0 times or less than the average thickness dA,
   at a portion of the painting layer containing the resin particle, when a thickness obtained by subtracting a thickness of a portion corresponding to the resin particle from an overall thickness of the painting layer including the resin particle is referred to as a substantial thickness of the painting layer at a portion containing the resin particle, an average substantial thickness dB, which is an average value of the substantial thicknesses at the portions each containing the resin particle, is within a range of 4 to 30 µm, and
   when the resin particle having a portion whose outer periphery is not covered with the film-forming components with a thickness of 1 µm or more is referred to as an exposed resin particle, an average value of number ratios of the exposed resin particles is 5 to 50%.
(2) The pre-painted steel sheet according to (1), wherein in the cross-section, 80% or more of a length along the outer periphery of the exposed resin particle is covered with the film-forming components.
(3) The pre-painted steel sheet according to (1) or (2), wherein
   when a 60-degree specular gloss G_{S} (60°) specified in JIS Z 8741:1997 is measured on a surface of the painting layer before and after tensile elongation of 30% is applied to the pre-painted steel sheet, a rate of change of the 60-degree specular gloss G_{S} (60°) before and after applying the tensile elongation is 60% or less.
(4) The pre-painted steel sheet according to any one of (1) to (3), wherein
   a compressive elastic modulus of the binder resin at 25°C is within a range of 60 to 150 MPa,
   a compressive elastic modulus of the resin particle at 25°C is within a range of 60 to 250 MPa, and
   the compressive elastic modulus of the binder resin at 25°C is equal to or less than the compressive elastic modulus of the resin particle at 25°C.
(5) The pre-painted steel sheet according to any one of (1) or (4), wherein
   when a particle size distribution is measured,
   the painting layer contains,
   small-size resin particles with an average particle size within a range of 9 to 26 µm, having a peak within a range of 17 ± 8 µm in particle size and
   large-size resin particles with an average particle size within a range of 40 to 70 µm, having a peak within a range of 55 ± 10 µm in particle size, as the resin particles.
(6) The pre-painted steel sheet according to (5), wherein
   a content percentage CL of the small-size resin particles is within a range of 5 to 30 mass% relative to a total solid content mass of the painting layer, and
   a content percentage CH of the large-size resin particles is within a range of 5 to 30 mass% relative to the total solid content mass of the painting layer.
(7) The pre-painted steel sheet according to (5) or (6), wherein
   a ratio (CL/CH) of the content percentage CL of the small-size resin particles to the content percentage CH of the large-size resin particles is within a range of 0.5 to 1.5.
(8) The pre-painted steel sheet according to any one of (5) to (7), wherein
   a ratio (øL/øH) of an average particle size øL of the small-size resin particles to an average particle size øH of the large-size resin particles is within a range of 0.14 to 0.58.
(9) The pre-painted steel sheet according to any one of (5) to (8), wherein
   a compressive elastic modulus of the small-size resin particle at 25°C is within a range of 60 to 250 MPa, and
   a compressive elastic modulus of the large-size resin particle at 25°C is within a range of 60 to 250 MPa.

### EXPLANATION OF CODES

- 1: pre-painted steel sheet
- 10: zinc-based plated steel sheet
- 11: base steel sheet
- 13: zinc-based plating layer
- 20, 25: painting layer
- 30: anti-corrosion coating layer
- 201: resin particle
- 201a: small-size resin particle
- 201b: large-size resin particle
- 203, 205: film-forming components

## Claims

1. A pre-painted steel sheet comprising: a zinc-based plated steel sheet having a zinc-based plating layer, which is a plating layer containing at least zinc, located on a surface of a base steel sheet; and a painting layer located on a surface of the zinc-based plating layer, wherein
the painting layer contains resin particles, and a binder resin and a color pigment as film-forming components,
in a cross-section cut at any position of the painting layer in a thickness direction,
an average value of area ratios, each of which is an area percentage occupied by the resin particles, is within a range of 5 to 40%,
an average thickness dA at each portion of the painting layer not containing the resin particle is within a range of 10 to 40 µm,
an average particle size ø of the resin particles is 4.0 times or less than the average thickness dA,
at a portion of the painting layer containing the resin particle, when a thickness obtained by subtracting a thickness of a portion corresponding to the resin particle from an overall thickness of the painting layer including the resin particle is referred to as a substantial thickness of the painting layer at a portion containing the resin particle, an average substantial thickness dB, which is an average value of the substantial thicknesses at the portions each containing the resin particle, is within a range of 4 to 30 µm, and
when the resin particle having a portion whose outer periphery is not covered with the film-forming components with a thickness of 1 µm or more is referred to as an exposed resin particle, an average value of number ratios of the exposed resin particles is 5 to 50%.

2. The pre-painted steel sheet according to claim 1, wherein in the cross-section, 80% or more of a length along the outer periphery of the exposed resin particle is covered with the film-forming components.

3. The pre-painted steel sheet according to claim 1 or 2, wherein
when a 60-degree specular gloss G_{S} (60°) specified in JIS Z 8741:1997 is measured on a surface of the painting layer before and after tensile elongation of 30% is applied to the pre-painted steel sheet, a rate of change of the 60-degree specular gloss G_{S} (60°) before and after applying the tensile elongation is 60% or less.

4. The pre-painted steel sheet according to claim 1 or 2, wherein
a compressive elastic modulus of the binder resin at 25°C is within a range of 60 to 150 MPa,
a compressive elastic modulus of the resin particle at 25°C is within a range of 60 to 250 MPa, and
the compressive elastic modulus of the binder resin at 25°C is equal to or less than the compressive elastic modulus of the resin particle at 25°C.

5. The pre-painted steel sheet according to claim 1 or 2, wherein
when a particle size distribution is measured,
the painting layer contains,
small-size resin particles with an average particle size within a range of 9 to 26 µm, having a peak within a range of 17 ± 8 µm in particle size and
large-size resin particles with an average particle size within a range of 40 to 70 µm, having a peak within a range of 55 ± 10 µm in particle size, as the resin particles.

6. The pre-painted steel sheet according to claim 5, wherein
a content percentage CL of the small-size resin particles is within a range of 5 to 30 mass% relative to a total solid content mass of the painting layer, and
a content percentage CH of the large-size resin particles is within a range of 5 to 30 mass% relative to the total solid content mass of the painting layer.

7. The pre-painted steel sheet according to claim 5, wherein
a ratio (CL/CH) of the content percentage CL of the small-size resin particles to the content percentage CH of the large-size resin particles is within a range of 0.5 to 1.5.

8. The pre-painted steel sheet according to claim 5, wherein
a ratio (øL/øH) of an average particle size øL of the small-size resin particles to an average particle size øH of the large-size resin particles is within a range of 0.14 to 0.58.

9. The pre-painted steel sheet according to claim 5, wherein
a compressive elastic modulus of the small-size resin particle at 25°C is within a range of 60 to 250 MPa, and
a compressive elastic modulus of the large-size resin particle at 25°C is within a range of 60 to 250 MPa.
